# EUROPEAN PATENT SPECIFICATION

(11) **EP 0 919 077 B1**
(45) Date of publication and mention of the grant of the patent: **14.01.2009**
(21) Application number: 98913102.4
(22) Date of filing: 19.03.1998
(51) Int. Cl.: H02J 7/35, H02J 1/10

(54) **HIGH EFFICIENCY LIGHTING SYSTEM**
BELEUCHTUNGSSYSTEM MIT HOHER LEISTUNGSFÄHIGKEIT
SYSTEME D'ECLAIRAGE EXTREMEMENT PERFORMANT

(30) Priority: 19.03.1997 US 820496
(43) Date of publication of application: 02.06.1999
(73) Proprietor: Nextek Power Systems, Inc., Shirley, NY 11967 (US)
(72) Inventor: WILHELM, William, G., Riverhead, NY 11901 (US)
(74) Representative: Skone James, Robert Edmund
(86) International application number: PCT/US1998/005836
(87) International publication number: WO 1998/041793

(56) References cited:
- DE-A- 4 232 516
- US-A- 4 075 504
- US-A- 4 349 863
- US-A- 4 636 931
- US-A- 4 725 740
- US-A- 4 731 547
- US-A- 4 742 291
- US-A- 5 059 871
- US-A- 5 089 974
- US-A- 5 200 644
- US-A- 5 477 091

## Description

### BACKGROUND OF THE INVENTION

The field of the invention is low voltage, direct current (DC), high efficiency, uninterruptible lighting and DC power systems capable of operating simultaneously with a multiplicity of alternating current (AC) and DC power sources.

Uninterruptible power supplies are known accessories especially when applied to computer equipment to "ride out" brief line power outages so that no data is lost or compromised and in emergency lighting systems where lighting integrity is essential. Many have limited battery storage capability due to ordinary high battery storage volume requirements and high storage battery unit cost. Therefore, operation periods with conventional uninterruptible means may not be maintained for an extended outage. Some special lighting systems are also protected in a similar fashion by an alternating AC power source for critical applications such as operating rooms in hospitals. Such systems, whether using storage batteries or AC auxiliary power sources tend to be complex and relatively expensive, and as a result are limited to only the most valuable applications. With consideration for cost many of these system are also compromised in output performance and durability. In lieu of such considerations, reduced amounts of auxiliary emergency lighting or other power needs are provided for only special applications and are served by packaged "add-on" systems which are only applied and engaged during power outages and not for normal standard lighting needs; these kinds of packages are often used in stairwells and consist of a simple housing enclosing a battery, basic charger, a power sensor means and one or two simple flood lamps of limited light output capacity.

These prior art systems, even if more complex and elaborate in construction, are compromised in performance, due to cost, and do nothing to enhance lighting quality, efficiency, or in other ways enhance the value of the power application except through its limited uninterruptible operation during critical power outages, and would not be considered as equivalent or economical substitutes for conventional lighting or other end-uses.

### OBJECTS OF THE INVENTION

It is an object of this invention to provide an uninterruptible lighting system and/or end-use power system that can be more versatile and that can be routinely substituted for conventional building or office lighting and other end-uses as if it where intended for conventional end-use needs without compromised end-use performance.

It is another object of this invention to provide high efficiency operation with lower operating cost than conventional incandescent and fluorescent lighting systems.

It is yet another object of this invention to provide longer term uninterruptibility (3 hours +) with small storage volumes.

It is an object of this invention to provide optimum battery management for longer stationary battery storage life, lower maintenance, and more economical operation.

It is a further object of this invention to provide for compatible and economical connection to alternate energy sources such as solar photovoltaic (PV) panels, fuel cells and other similar DC power supply devices and to manage these sources in relation to serving the output load or loads while maintaining the storage battery within its preferred performance range.

It is another object of this invention to provide a system with enhanced safety through low voltage operation nominally at 26.6 volts for a two lead-acid, 12 volt battery system at room temperature between the power control unit and the lighting fixtures or other DC end-use devices. Other battery systems may also be applied and the output service voltage so adjusted for optimum battery maintenance and life, while serving a suitable DC compatible load.

It is yet another object to achieve high power quality through dynamic high power factor correction and similarly achieving low total harmonic AC supply line distortion.

It is an object of this invention to achieve greater overall application value and service quality with low voltage operation while still using standard building wiring and wire sizes while achieving very small voltage drops.

It is still another object of this invention to provide overall building power integrity for lighting and other end-uses that are immune to area and central disruptions such as bombings and confined disasters through a modular independent power in-line device between the AC circuit breaker and the end-use that increases system and subsystem integrity with simple component standardization.

It is yet another object of the invention to provide a universal power interface that accepts a multiplicity of both AC and DC electric power sources simultaneously and directs them to the lighting and/or end-use application in a shared manner.

It is still another object of the invention to provide a universal power interface that accepts a multiplicity of AC or DC electric power sources singularly and without the other in support of the lighting and/or end-use application with conventional end-use expected quality.

It is still further an object of the invention to provide a method and a means to utilize the invention as a power interface where low voltage, DC operation may be utilized in buildings where there is conventional standard high voltage AC wiring and cable sizes.

It remains still an object of the invention to provide a modular structure which allows the power units to be connected in series to satisfy higher DC operating voltages in increments of the individual power unit design voltage.

US-A-4075504 describes a power supply apparatus utilizing the voltage output of an unregulated, four-wave-rectified AC-to-DC converter. High efficiency gas discharge lighting is achieved by using power control means with such a voltage regulator design but it would be impractical to run fluorescent lamps and the like as one of the loads.

US-A-5477091 describes an electrical power distribution system which uses a centralized unregulated power supply with a DC power distribution bus backed up by a battery. The end loads are either AC or DC. There is no suggestion of any method of controlling power flow.

According to the present invention, a power system for supplying power to lighting and other end-use applications, requiring DC electrical power and maintaining normal lighting conditions with conventional lighting fixtures comprises:
power control means for receiving electrical power from a first source and DC power from an alternative DC power source and for supporting electrical DC compatible end-use device load or loads with or without the alternative DC power source in service;
   wherein
the power control means has means for receiving AC alternating current electrical power of many frequencies;
means for converting said electrical power from a first source to DC voltage regulated electrical power;
means for delivering required regulated low voltage DC electrical power to voltage matched lamp or lamps within said lighting fixtures and/or at least one DC compatible end-use device load; and
means for combining said converted electrical power from a first source with said alternative DC power source in service to support said at least one DC compatible end-use device load or loads;
and said power control means are arranged to alter said converted DC output voltage as a means of controlling power delivered by said alternative DC power source.

This includes an application of a high efficiency lighting system for maintaining normal lighting levels and conditions by using normal lighting fixtures incorporating a variety of DC electronic ballasts for use with gas discharge lamps requiring DC electrical power as defined by the voltage requirements of this current invention.

When connected to an AC power source the power control means converts the source of AC electrical power into a regulated low voltage DC compatible with the long-term "float" voltage requirements of a stationary rechargeable storage battery electrical system.

A battery provides, on a standby basis, the required DC low voltage electrical power to the power control means. The storage battery as in the example of a lead-acid design is connected to the power control means so that the battery may be maintained in a fully charged and "float" condition by the power control means during normal supply of AC electrical power from the grid or similar AC source .

The power control means also serves to deliver the required DC electrical power from the battery to the DC compatible lighting fixtures or compatible end-use during an AC electrical power outage to maintain the DC operating power without interruption.

The power control means can be a plurality of multiple power control means, each connected to its own battery and/or alternative DC power source for maintaining the lighting or end-use power in a building with multiple rooms and area requirements

An optional photovoltaic (PV) source of DC electrical power may be connected to the power control means for proportionally reducing the amount of electrical power taken from said grid or similar AC source. The control means further is capable of directing any excess PV power, not required by the electrical load to an optionally connected storage battery without exceeding it's safe and stable long-term operating requirements. If the power application does not include the battery the control means will similarly and proportionally support the load with the AC source while not exceeding operational limits.

The storage battery provides, on a standby basis, DC low voltage electrical power to the load, in the event that the control means highly regulated DC voltage drops below the battery voltage, as in the case where the AC source interrupts the converted DC supply from the control means. Otherwise the power control means maintains the battery in a fully charged and standby "float" condition by electrical power from an AC grid source.

In one version of this invention, AC power input is converted by the power control means into the same regulated DC "float" voltage, without the use of a battery or axially DC source, thus satisfying a low voltage DC lighting. High efficiency gas discharge lighting is thus achieved by optimum voltage control and very high AC to DC conversion efficiencies provided by the power control means, with its switching-mode voltage regulator design, and further by the elimination of similar AC to DC conversion components in the DC ballasts, as in conventional electronic ballasts designs. While switching-mode voltage regulation is preferred, in this invention the invention is not limited by such voltage regulation means.

The power control means may also include circuitry to prevent DC current from exceeding a predetermined limit, while still delivering power. The power control means may also include other circuitry to detect a short circuit such that the power control means can interrupt DC power delivery until the short circuit is removed.

This system for maintaining normal power for lighting fixtures requiring DC electrical power, includes the power control means for receiving DC electrical power from a DC source and delivering required DC electrical power to the lighting fixtures, as well as a power control means converting AC electrical power to DC electrical power.

In a further embodiment for remote use, such as a remote facilities without access to conventional AC power, a high efficiency lighting system maintains normal lighting conditions with lighting fixtures requiring DC electrical power. The remote system includes a power control means for receiving DC electrical power from a suitable auxiliary DC power source such as a photovoltaic panel and delivering required low voltage DC electrical power to the remote facility lighting fixtures and/or compatible end-use application, and a storage battery. The power control means also serves to control charging of a battery to a maximum and optimum state-of-charge.

The battery also provides, on a standby basis, the required DC low voltage electrical power to the power control means. It is connected to the power control means while being maintained in a charged condition by the power control means, during availability of the DC power source as in the case of sunshine hours of input of power from the photovoltaic panel.

Moreover, the power control means delivers required DC electrical power from the battery to the lighting fixtures during periods of time when power from the auxiliary DC source or photovoltaic panel is not available, such as when the source must be interrupted for specific reasons as at night and cloud cover times for the PV source.

### BRIEF DESCRIPTION OF THE DRAWINGS

The present invention can best be understood in conjunction with the accompanying drawings, in which:
Figure 1 is a block diagram of basic power system applied to lighting showing the basic input and output power connections;
Figure 2 is a physical block diagram of basic power system used as an uninterruptible lighting system with the battery system connected but without an auxiliary DC power input, such as photovoltaic (PV).
Figure 3 is a wiring layout of a single lighting circuit configuration using a concept called a cluster that avoids excessive low voltage current carrying cable lengths and voltage drops from the low voltage DC power module;
Figure 4 is a wiring layout of a four power module system accommodating a larger lighting area requirement that avoids excessive low voltage operational cable lengths and voltage drops while supported from a single AC high voltage line and circuit breaker;
Figure 5 is a block diagram of lighting system as in Figure 2 but with a PV panel;
Figure 6 is a front view of power control unit with typical power input and output power connections;
Figure 7 is a wiring diagram and specifications for a two lamp low voltage DC gas discharge ballast having compatibility with the power control unit;
Figure 8 is a wiring diagram and specifications for a single lamp low voltage DC gas discharge ballast having compatibility with the power control unit;
Figure 9 is a front view of battery containment enclosure;
Figure 10 is a block diagram of a power control unit showing typical power input and output power connections and the internal functions of the power control unit; and,
Figure 11 is a block diagram of an alternate energy option lighting system using natural gas cogeneration as an alternative DC power source.

### DETAILED DESCRIPTION OF THE INVENTION

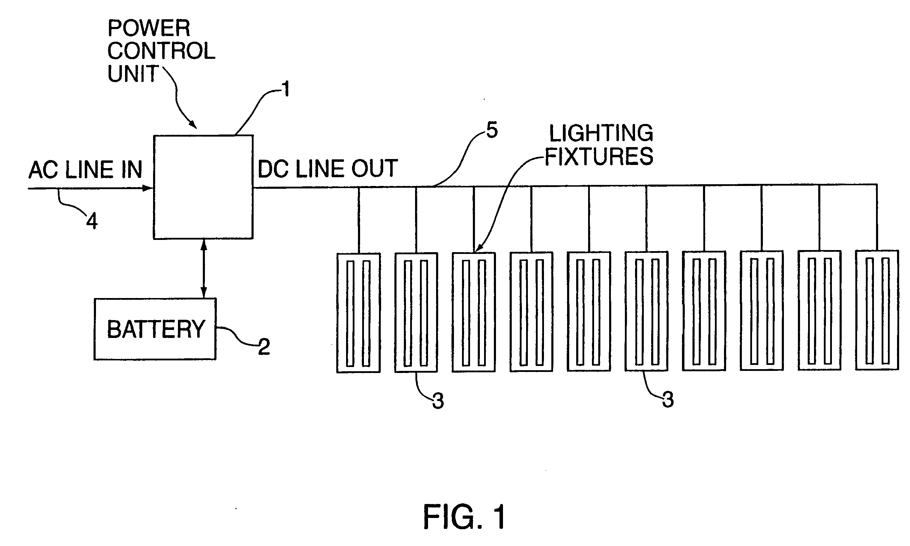

Figure 1 shows a block diagram of the major components of an uninterruptible lighting system supported by this invention. This system may also be used for other DC compatible loads that are designed to use the output voltage of the power invention. It may be installed anywhere conventional building lighting or other end-use devices are required. Unlike emergency lighting and other emergency power systems, this is a full service, high quality end-use power product. It functions with standard fixtures, lamps and DC compatible devices, without compromise in output performance in the event of an conventional power failure. This permits normal power supporting functions to continue for extended hours using battery storage without disruption of work activity due to loss of lighting and potentially other power needs. The key subsystem that ties the entire system together is the power control unit (PCU) 1 which normally uses standard AC grid power to support the end-use application and keep the optional storage battery 2 in an optimal state of charge. When used to support lighting the lighting fixtures 3 are gas discharge lamps like fluorescent tubes using electronic ballasts which require a low voltage (nominal 26.6 volts) DC input supplied by line 5 from power control unit 1. Other lamp types may also be used, such as incandescent lamps. During a power outage, the DC line 5 is supplied by battery 2.

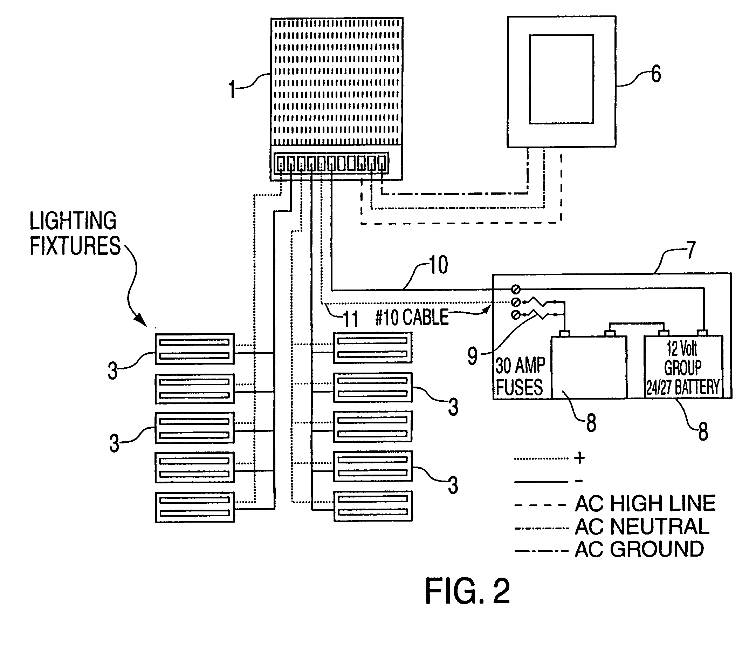

Figure 2 shows a physical block diagram showing the AC electric service panel 6 with a standard three wire cable system supplying either voltages of 120 through 277 VAC to PCU 1. Battery case 7 normally contains two group 24/27 size deep discharge lead-acid storage batteries 8 wired in series and through a 30 amp fuse 9 and cables 10 and 11 to the PCU 1. The wiring to all lighting fixtures and compatible end-uses 3 is at a nominal working voltage of 26.6 volts DC. In the nominal embodiment, each PCU 1 can power ten two tube 48 inch T8 fluorescent fixtures or 20 single tube fixtures 3 or any equivalent electrical DC load of 25 amps of current at or near the design maintenance voltage of the storage battery system used.

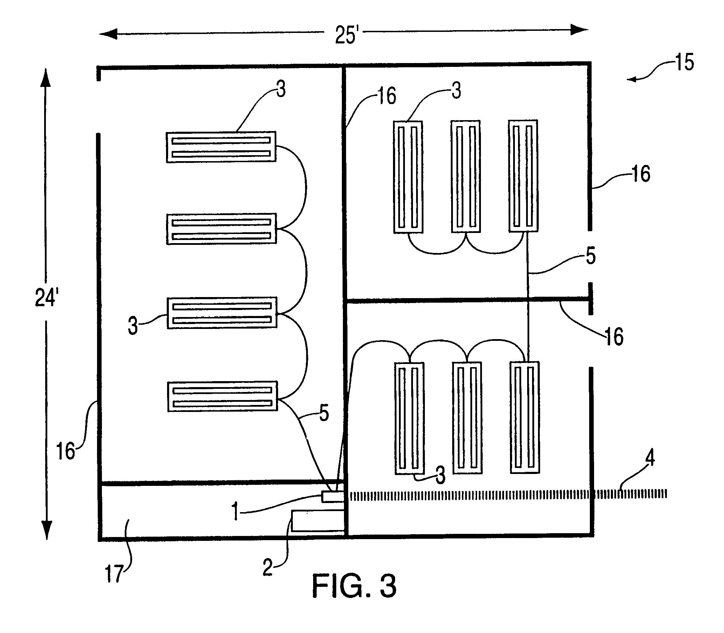

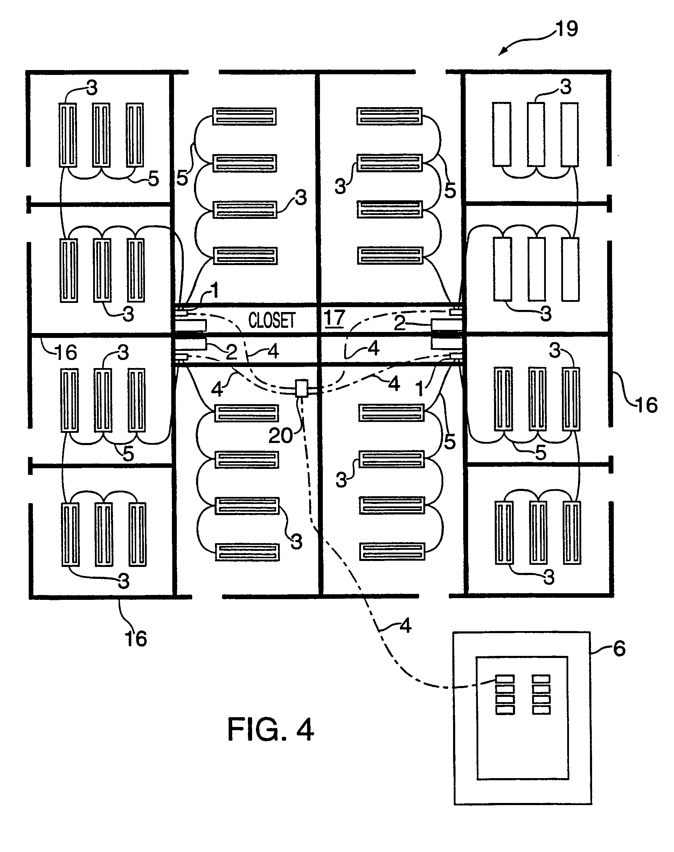

Figure 3 shows a wiring layout for a typical office lighting application 15 with walls 16 as supported by a single PCU 1. A closet area 17 conveniently serves to house a relatively small battery volume 2. The AC line 4 leads to PCU 1 which because of its compact size may be advantageously mounted in the ceiling cavity. The DC wiring 5 to the lighting fixtures is also in the ceiling cavity and due to close proximity of the PCU 1 provides a short wiring path to the lighting fixtures 3. This arrangement of low voltage connected lighting loads forms an integral cluster that many be duplicated many times from a single supporting high voltage AC line as shown in Figure 4 while still minimizing load support voltage drops.

The PCU 1 is electronically input compliant to a wide range of continuous AC supply voltages and will accommodate a range of inputs from 110 to 277 VAC in the PCU 1. The input power to the PCU 1 is a nominal 725 watts for an AC rms current ranging from 2.6 to 6.6 amps depending on the AC input voltage. The equivalent range of input AC currents will vary depending on the AC input voltage. Because the PCU 1 is highly power factor corrected to .99, a 20 amp circuit breaker and number 12 wire can be expected to support a large number of PCUs and their corresponding lighting capacity achieving a maximum of 3 PCU's from a 120 volt line. Similarly 6 units may be supported from a 277 volt line for a total DC power output of about 4000 watts and an AC input of 4300 watts respectively.

Figure 4 shows a wiring layout of office area 19 with walls 16 serving 8 small offices and four larger ones. This involves the use of four separate uninterruptible lighting systems using four PCU's 1 and four battery modules 2 located in four central closets 17. The four PCU's are supplied from a single 220 VAC circuit breaker in power panel 6 via AC cable 4 as distributed from distribution box 20. Each of the lighting systems supplies 10 two lamp fixtures 3.

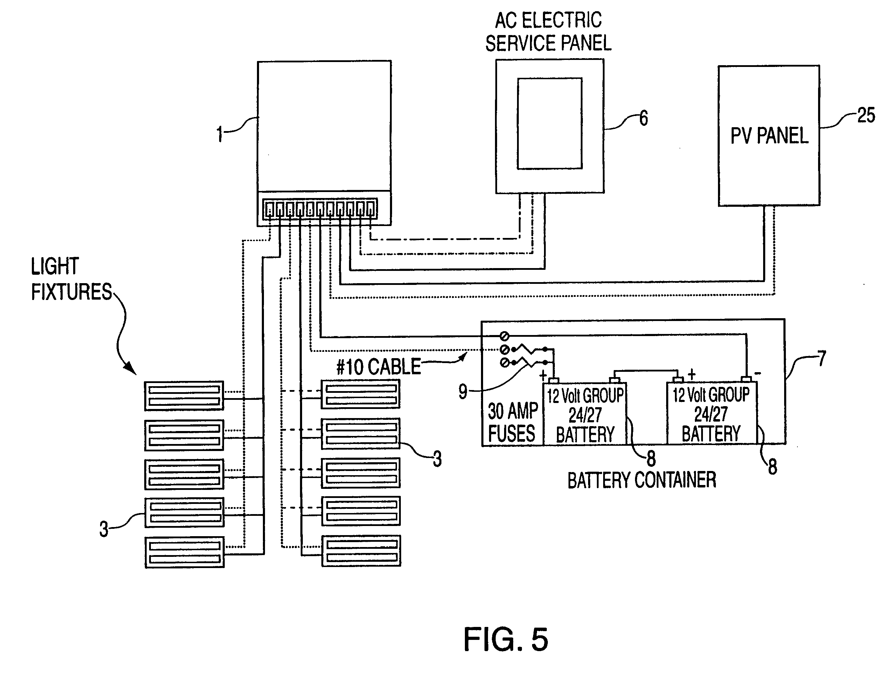

There are several different power modes possible with the PCU 1. Figure 5 shows an uninterruptible lighting system that includes AC electric service panel 6, battery case 7 with batteries 8 and fuse 9 connected by cables 10,11 to PCU 1, as well as photovoltaic (PV) panel 25. This mode allows solar energy to be a auxiliary power source to the AC line while maintaining the storage battery case 7 with batteries 8 as a power supplement during AC outages and solar variations.

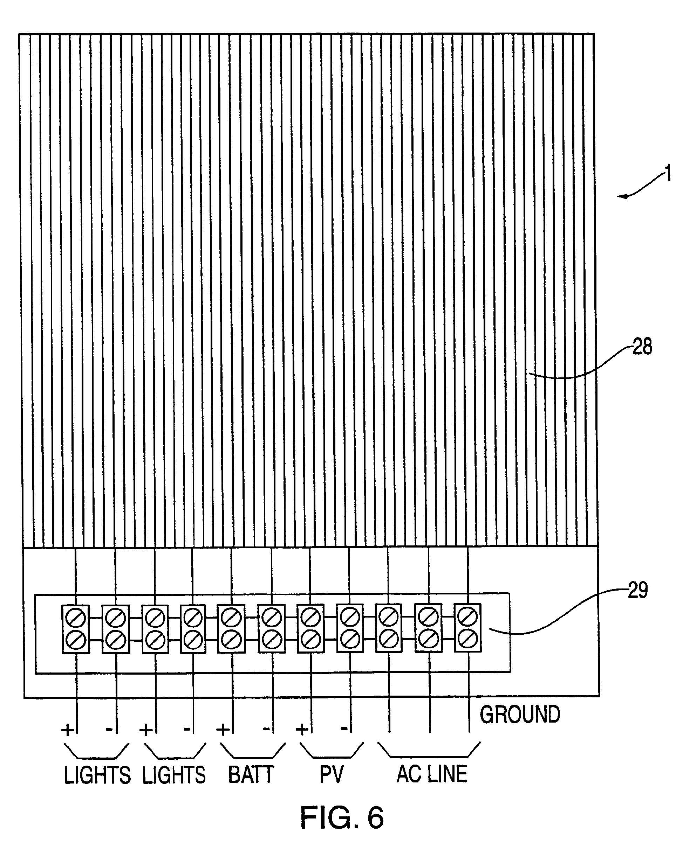

As shown in Figure 6, a front view of PCU 1, it is a simple matter to wire the PV panel to the PCU 1 without complicated AC power conditioners as in convention PV applications. The PV panel is merely connected to two PV input terminals on the PCU 1. This mode permits high reliability lighting using an AC line, battery back-up, and PV as overlaying power sources.

The simplest power operating mode is when the AC is the only input power source with the PCU 1 supporting a low voltage DC lighting system. Such a system with the PCU 1 alone attached to the AC line is a viable high efficiency lighting system with minimum interface power losses that can pay for itself by reducing energy consumption. By simply connecting the battery subsystem to the basic system above, the user achieves the additional power mode satisfying uninterruptible DC power operation in support of lighting. Still another power mode of operation is achieved by using the PCU 1 without a battery but with AC input and a PV panel. In this mode the PV contribution is preferentially absorbed by the DC load with the balance supplied by the AC input.

In still another power operating mode where the PCU 1 may be used as a stand alone power system without grid supported central AC generation. Such a system is desirable in an area remote from the AC grid. With such a system, using the PCU 1 attached to a suitable PV panel and a suitable rechargeable storage battery, solar lighting and other DC load needs may be satisfied including an DC to AC 60 HZ power inverter.

The PCU 1 is distinguished by being sufficiently flexible to support a multiplicity of power operating modes while satisfying lighting and other electrical requirements. It can also supply other DC loads such as household appliances, microwave ovens, DC refrigeration and the like. Furthermore, it can also alternately accept external DC power from many varied sources other than photovoltaic (PV), such as wind generators or a engine powered DC generator.

Figure 6 also shows a front view of PCU 1 with finned heat sink 28 and terminal strip 29.

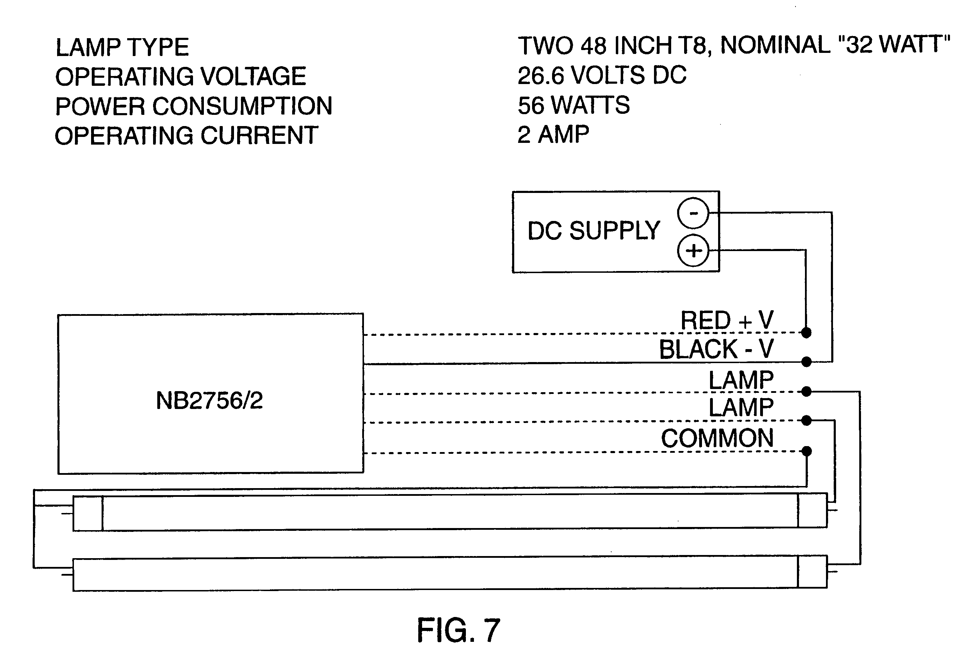

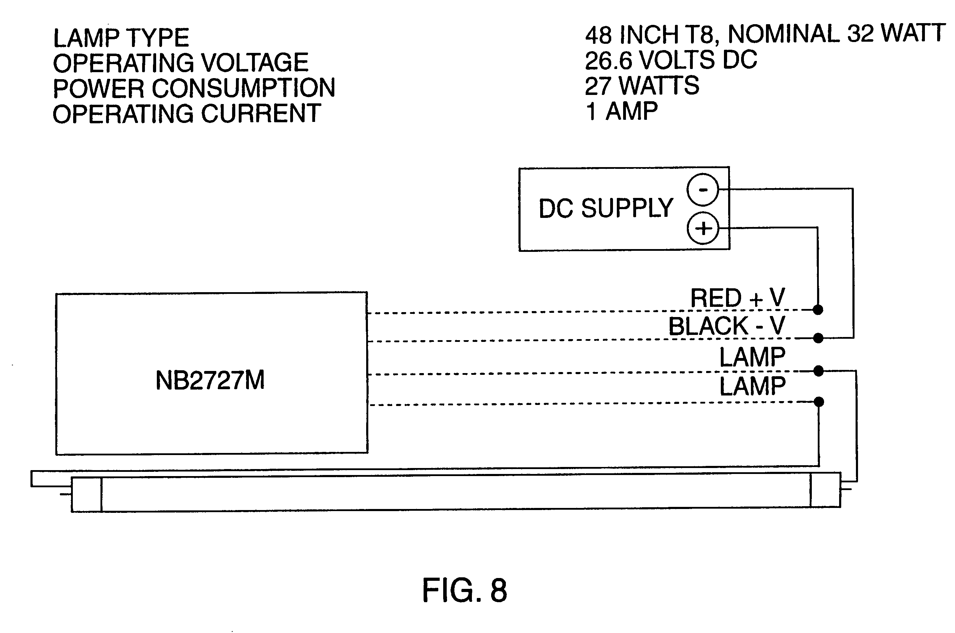

Figures 7 and 8 show the wiring diagrams and specifications for the two lamp and one lamp DC ballasts respectively.

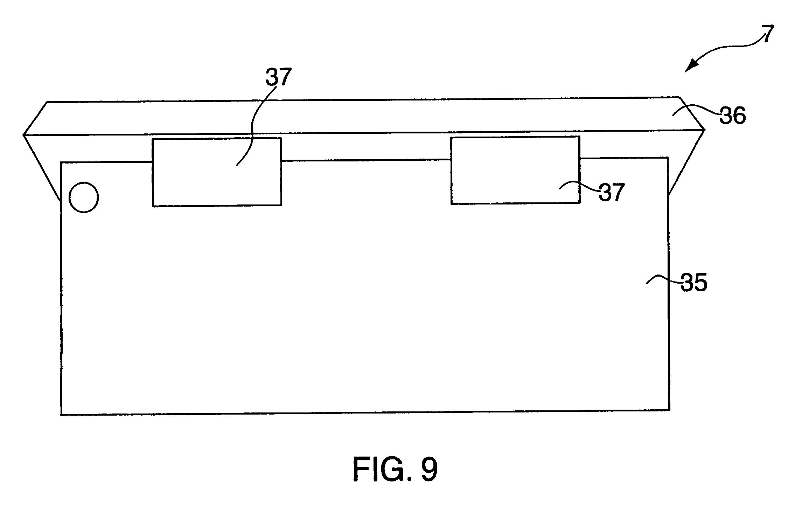

Figure 9 shows a front view of the battery case 7 with housing 35, hinged lid 36 and latches 37. It is a thermoplastic case rated for sealed type lead-acid batteries.

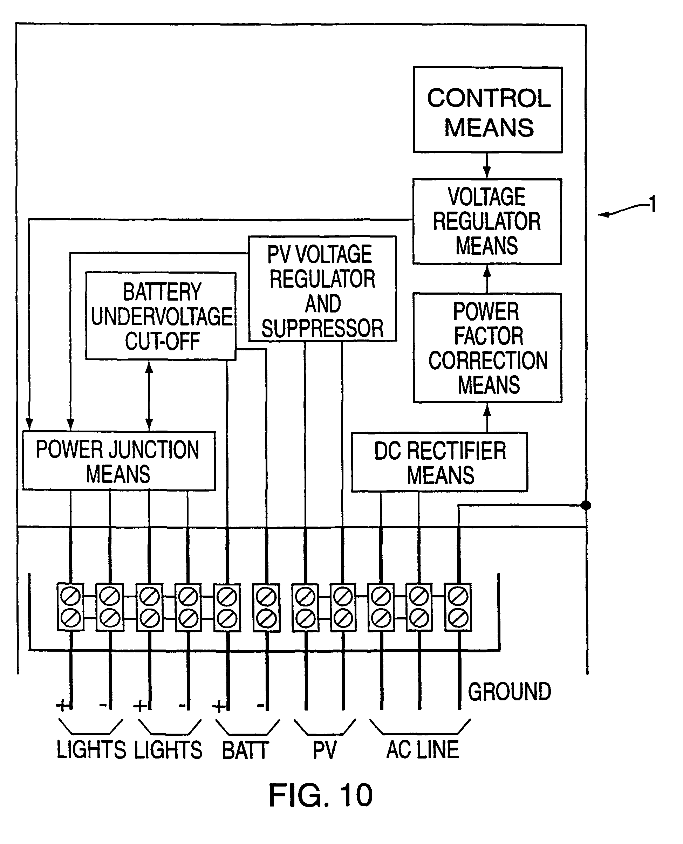

Figure 10 shows a block diagram of the PCU 1. The AC input is rectified by DC Rectifier Means such as a bridge circuit. The Power Factor Correction Means is used to achieve a high power factor and low total harmonic distortion at the AC input. The Control Means and Voltage Regulator means interact through circuits such as pulse width modulation and DC to DC switching power supply topologies to provide the nominal 26.6 volts to the lighting ballasts or other suitable DC loads through the power junction means. Figure 10 also shows the Control Means and Voltage Regulator means may further interact to limit the upper operating current of PCU 1 and further to shut down the DC output of the PCU 1 in the event of a detected short circuit. Such short circuit detection circuitry being continually active and dynamic and thus resetable at any time to normal. Other voltages including programmable voltages are also possible, such as 13.3, 26.6, 39.9 etc. to support higher series connected battery system and control requirements.

The Battery Undervoltage Cut-Off disconnects the battery in situations of charge depletion to prevent over discharging that contributes to chemical and physical damage to the storage battery. The PV Voltage Regulator and Suppressor is a power conditioner/controller to suppress voltage transients and also to prevent dangerous over charging of the storage battery from the PV panel.

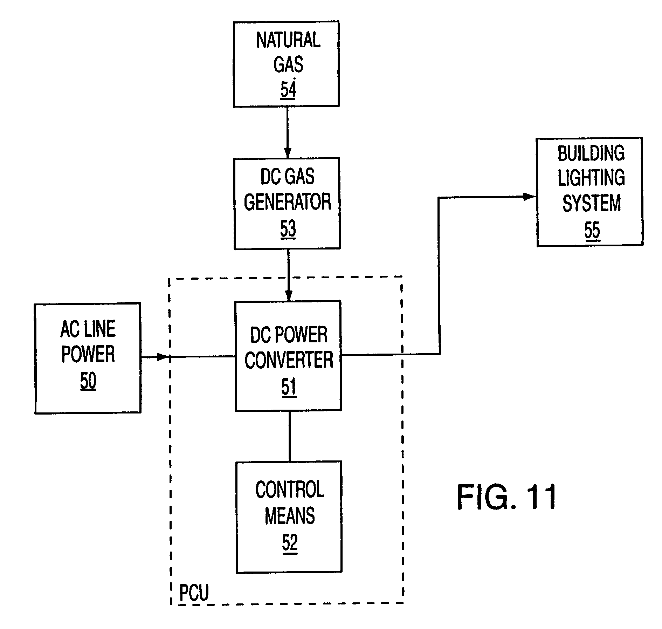

Figure 11 is an alternate embodiment for a powered lighting system including natural gas cogeneration. AC power 50 is normally converted to DC power by the PCU 1 consisting of the DC power converter 51 and control means 52 or otherwise specified by the operations of PCU 1. However, a cogenerator in the form of a gas fueled DC generator 53 receives natural gas as an primary energy source from a natural gas source 54, and converts it into DC power to support building lighting system 55, such as electronic ballasted fluorescent lighting. This system can provide a flatter and more predictable power demand curve for electric utilities by altering the customers demand using building the lighting system 55, supplemented by the gas energy source thus mitigating peak power from electric utility generating sources. This can result in reduced demand charges.

The cogeneration system can run continuously for lighting load 55, and does not require costly synchronous 60 HZ power inverters to be sent back through the AC power line 50.

DC gas generator 53 directly couples to building lighting system 55 through the auxiliary DC input of the PCU 1 to operate building lighting system 55.

Other embodiments may be applied to the present invention without departing from the scope of the invention, as defined in the appended claims.

## Claims

1. A power system for supplying power to lighting and other end-use applications, requiring DC electrical power and maintaining normal lighting conditions with conventional lighting fixtures, said power system comprising:
power control means for receiving electrical power from a first source and DC power from an alternative DC power source and for supporting electrical DC compatible end-use device load or loads with or without the alternative DC power source in service;
wherein
the power control means has means for receiving AC alternating current electrical power of many frequencies;
means for converting said electrical power from a first source to DC voltage regulated electrical power;
means for delivering required regulated low voltage DC electrical power to voltage matched lamp or lamps within said lighting fixtures and/or at least one DC compatible end-use device load; and
means for combining said converted electrical power from a first source with said alternative DC power source in service to support said at least one DC compatible end-use device load or loads;
and said power control means are arranged to alter said converted DC output voltage as a means of controlling power delivered by said alternative DC power source.

2. The power system of Claim 1, said power control means further comprising means for limiting current at said DC output to a means for defined upper limit prescribed by a maximum power capability of said power control means while still delivering power.

3. The power system of Claim 1, said power control means further comprising means for interrupting delivered output power upon detection of a short circuit across output terminals of said power control means.

4. The power system of Claim 1, wherein said alternative DC power source is a rechargeable storage battery for, in the event of a power failure from said AC source, continuing to service said at least one DC compatible load, and the power control means are arranged to optimally maintain the charge in a stationary standby mode of said rechargeable storage battery by said regulated output voltage of said power control means.

5. The power system of Claim 4, having means to activate the rechargeable storage battery in support of said at least one DC compatible load upon extinguishing of said AC input to said power control means.

6. The power system of Claim 4, wherein said power control means are arranged to, in absence of a supporting power source, electrically isolate said storage battery from said at least one DC compatible load in the event that a battery state-of-charge, as measured by terminal voltage of said battery, falls below a predetermined value.

7. The power system of Claim 4, wherein said power control means are arranged to interrupt power to said storage battery from any other connected DC power source in the event said storage battery is fully charged.

8. The power system of Claim 1, in wherein said alternative DC power source is an energy converter for converting an energy source into an electrical compatible DC voltage.

9. The power system of Claim 1, wherein said alternative DC power source is a photovoltaic solar panel.

10. The power system of Claim 1, wherein said alterative DC power source is a fuel cell.

11. The power system of Claim 1, wherein said alternative DC power source is a fossil fueled internal combustion mechanical driven DC electric generator.

12. The power system of Claim 1, wherein said alternative DC power source is a fueled DC cogenerator.

13. The power system of Claim 12, wherein said fueled DC cogenerator is a thermal photovoltaic generator.

14. The power system of Claim 12, wherein fueled DC cogenerator is a fuel cell generator.

15. The power system of Claim 1, wherein said alternative DC power source is arranged to produce required DC power.

16. The power system of Claim 4, wherein said storage battery is combined in a power combination with an energy converter for converting an energy source into an electrical compatible DC voltage.

17. The power system of Claim 16, wherein said power combination is arranged to deliver power to said load proportionally.

18. The power system of Claim 16, wherein said power combination is arranged to deliver power to said load proportionally as a power load leveler.

19. The power system of Claim 4, wherein said power control means for receiving AC alternating current from a source has means to correct power factor to near unity, with very low, total harmonic distortion reflected to said AC source.

20. The power system of Claim 1, wherein said power control means and said alternative DC power source is arranged to power a cluster of multiple DC loads, in order to minimize low-voltage cable lengths and thus power robbing voltage drops.

21. The power system as in Claim 20, comprising a standard high voltage AC cable of proportional longer length relative to said DC low-voltage cables for supplying power to the clusters.

22. The power system as in Claim 20, comprising multiple power control means, each said power control means arranged to control power of its own cluster, the power system further comprising a single standard high voltage AC cable of proportional longer length relative to said DC low-voltage cables for supplying power to each own clusters.

23. The power system of Claim 4, wherein said storage battery is combined in a power combination with an energy converter in a packaged container in service to said DC compatible load or loads.

24. The power system of Claim 4, where said storage battery is combined in a power combination with an energy converter for operating in service to a DC compatible load or loads without support of central grid supplied AC power supply as in a non-grid, stand-alone supported power system.

25. The power system of Claim 4, wherein said power control means remain as a central power control point in said power system for all alternative power sources external to the central grid source, and wherein said power control means is further arranged to use a local source of AC generated power.

## Patentansprüche

1. Stromsystem für die Stromversorgung von Beleuchtungs- und anderen Endbenutzungs-Anwendungen, die elektrischen Gleichstrom benötigen, und die Beibehaltung normaler Beleuchtungszustände mit herkömmlichen Beleuchtungskörpern, wobei das Stromsystem enthält:
eine Stromsteuereinrichtung, die elektrischen Strom von einer ersten Quelle und Gleichstrom von einer alternativen Gleichstromquelle empfängt und eine elektrische gleichstromkompatible Endbenutzungsvorrichtungs-Verbrauchereinrichtung oder -Einrichtungen mit oder ohne Betrieb der alternativen Gleichstromquelle versorgt;
wobei
die Stromsteuereinrichtung eine Einrichtung für den Empfang eines elektrischen Wechselstroms zahlreicher Frequenzen;
eine Einrichtung, die den elektrischen Strom von einer ersten Quelle in einen gleichstromspannungsgeregelten elektrischen Strom umwandelt;
eine Einrichtung, die erforderlichen geregelten elektrischen Niederspannungsgleichstrom einer spannungsabgestimmten Lampe bzw. Lampen in den Beleuchtungskörpern und/oder wenigstens einer gleichstromkompatiblen Endbenutzungsvorrichtungs-Verbrauchereinrichtung zuführt; und
eine Einrichtung hat, die den umgewandelten elektrischen Strom von einer ersten Quelle mit der im Betrieb befindlichen alternativen Gleichstromquelle kombiniert, um die wenigstens eine gleichstromkompatible Endbenutzungsvorrichtungs-Verbrauchereinrichtung bzw. -Verbrauchereinrichtungen zu versorgen;
und die Stromsteuereinrichtung so eingerichtet ist, dass sie die umgewandelte Gleichstromausgangsspannung als eine Einrichtung zum Steuern von Strom verändert, der von der alternativen Gleichstromquelle bereitgestellt wird.

2. Stromsystem nach Anspruch 1, bei dem die Stromsteuereinrichtung weiterhin eine Einrichtung enthält, die Strom am Gleichstromausgang für eine Einrichtung für eine definierte Obergrenze begrenzt, die durch ein maximales Stromleistungsvermögen der Stromsteuereinrichtung vorgeschrieben ist, während sie weiterhin Strom bereitstellt.

3. Stromsystem nach Anspruch 1, bei dem die Stromsteuereinrichtung weiterhin eine Einrichtung enthält, die den bereitgestellten Ausgangsstrom bei Erfassung eine Kurzschlusses über den Ausgangsanschlüssen der Stromsteuereinrichtung unterbricht.

4. Stromsystem nach Anspruch 1, bei dem die alternative Gleichstromquelle eine wiederaufladbare Speicherbatterie ist, um für den Fall einer Stromfehlfunktion von der Wechselstromquelle den Betrieb der wenigstens einen gleichstromkompatiblen Verbrauchereinrichtung fortzusetzen, und die Stromsteuereinrichtung so eingerichtet ist, dass sie die Ladung in einer stationären Bereitschaftsbetriebsart der wiederaufladbaren Speicherbatterie durch die regulierte Ausgangsspannung der Stromsteuereinrichtung optimal beibehält.

5. Stromsystem nach Anspruch 4, das eine Einrichtung enthält, die die wiederaufladbare Speicherbatterie in Versorgung der wenigstens einen gleichstromkompatiblen Verbrauchereinrichtung bei Abschaltung des Wechselstromeingangs zu der Stromsteuereinrichtung aktiviert.

6. Stromsystem nach Anspruch 4, bei dem die Stromsteuereinrichtung dazu eingerichtet ist, in Abwesenheit einer versorgenden Stromquelle die Speicherbatterie von der wenigstens einen gleichstromkompatiblen Verbrauchereinrichtung für den Fall elektrisch zu isolieren, dass ein Batterieladungszustand, wie er durch die Anschlussspannung der Batterie gemessen wird, unter einen vorbestimmten Wert fällt.

7. Stromsystem nach Anspruch 4, bei dem die Stromsteuereinrichtung so eingerichtet ist, dass sie Strom zur Speicherbatterie von einer beliebigen anderen angeschlossenen Gleichstromquelle für den Fall unterbricht, dass die Speicherbatterie vollständig geladen ist.

8. Stromsystem nach Anspruch 1, bei dem die alternative Gleichstromquelle ein Energiewandler ist, der eine Energiequelle in eine elektrisch kompatible Gleichstromspannung umwandelt.

9. Stromsystem nach Anspruch 1, bei dem die alternative Gleichstromquelle ein Fotovoltaik-Solarpaneel ist.

10. Stromsystem nach Anspruch 1, bei dem die alternative Gleichstromquelle eine Brennstoffzelle ist.

11. Stromsystem nach Anspruch 1, bei dem die alternative Gleichstromquelle ein elektrischer Gleichstromgenerator ist, der durch fossile Verbrennung mechanisch angetrieben wird.

12. Stromsystem nach Anspruch 1, bei dem die alternative Gleichstromquelle ein brennstoffgetriebener Gleichstrom-Cogenerator ist.

13. Stromsystem nach Anspruch 12, bei dem der brennstoffgetriebene Gleichstrom-Cogenerator eine thermischer Fotovoltaikgenerator ist.

14. Stromsystem nach Anspruch 12, bei dem der brennstoffgetriebene Gleichstrom-Cogenerator ein Brennstoffzellengenerator ist.

15. Stromsystem nach Anspruch 1, bei dem die alternative Gleichstromquelle so eingerichtet ist, dass sie den erforderlichen Gleichstrom erzeugt.

16. Stromsystem nach Anspruch 4, bei dem die Speicherbatterie in einer Stromkombination mit einem Energiewandler kombiniert ist, der eine Stromquelle in eine elektrisch kompatible Gleichstromspannung umwandelt.

17. Stromsystem nach Anspruch 16, bei dem die Stromkombination derart eingerichtet ist, dass sie der Verbrauchereinrichtung Strom proportional zuführt.

18. Stromsystem nach Anspruch 16, bei dem die Stromkombination so eingerichtet ist, dass sie Strom der Verbrauchereinrichtung als Stromverbrauchs-Ausgleichseinrichtung zuführt.

19. Stromsystem nach Anspruch 4, bei dem die Stromsteuereinrichtung zum Empfangen des Wechselstroms von einer Quelle Einrichtungen hat, die den Stromfaktor beinahe auf Einheitlichkeit korrigieren, wobei eine sehr geringe, gesamte harmonische Verzerrung der Wechselstromquelle widergespiegelt wird.

20. Stromsystem nach Anspruch 1, bei dem die Stromsteuereinrichtung und die alternative Gleichstromquelle so eingerichtet sind, dass sie einen Cluster von mehreren Gleichstromverbrauchereinrichtungen mit Strom versorgen, um Niederspannungs-Kabellängen und somit stromraubende Spannungsabfälle zu minimieren.

21. Stromsystem nach Anspruch 20, enthaltend ein herkömmliches Hochspannungswechselstromkabel einer proportionalen längeren Länge im Bezug auf die Niederspannungsgleichstromkabel, um den Clustern Strom zuzuführen.

22. Stromsystem nach Anspruch 20, enthaltend mehrere Stromsteuereinrichtungen, wobei jede Stromsteuereinrichtung dazu eingerichtet ist, den Strom ihres eigenen Clusters zu steuern, wobei das Stromsystem ein einziges herkömmliches Hochspannungswechselstromkabel proportional längerer Länge im Bezug auf die Niederspannungsgleichstromkabel enthält, um jedem eigenen Cluster Strom zuzuführen.

23. Stromsystem nach Anspruch 4, bei dem die Speicherbatterie in einer Stromkombination mit einem Energiewandler in einem gepackten Behälter in Betrieb für die gleichstromkompatible(n) Verbrauchereinrichtung(en) kombiniert ist.

24. Stromsystem nach Anspruch 4, bei dem die Speicherbatterie in einer Stromkombination mit einem Energiewandler kombiniert ist, um in Betrieb für eine gleichstromkompatible Verbrauchereinrichtung oder Verbrauchereinrichtungen ohne Unterstützung einer durch ein Zentralnetz zugeführten Wechselstromversorgung wie ein nicht netzabhängiges, eigenständig unterstütztes Stromsystem zu arbeiten.

25. Stromsystem nach Anspruch 4, bei dem die Stromsteuereinrichtungen als zentraler Stromsteuerpunkt im Stromsystem für sämtliche alternativen Stromquellen verbleibt, die nicht Bestandteil der zentralen Netzquelle sind, und die Stromsteuereinrichtung zudem weiterhin dazu eingerichtet ist, eine lokale Quelle eines wechselstromerzeugten Stroms zu verwenden.

## Revendications

1. Système d'alimentation pour alimenter des applications d'éclairage et d'autres applications finales, nécessitant une puissance électrique continue, et pour maintenir des conditions d'éclairage normales avec des installations d'éclairage classiques, ledit système d'alimentation comprenant :
des moyens de commande de puissance pour recevoir une puissance électrique d'une première source et une puissance continue d'une autre source de puissance continue et pour prendre en charge une charge ou des charges de dispositifs électriques finaux compatibles continus avec ou sans l'autre source de puissance continue en service ;
dans lequel
les moyens de commande de puissance comportent des moyens pour recevoir une puissance électrique alternative AC à de nombreuses fréquences ;
des moyens pour convertir ladite puissance électrique provenant d'une première source en une puissance électrique régulée en tension continue ;
des moyens pour délivrer une puissance électrique continue basse tension régulée nécessaire à une lampe ou des lampes adaptées à la tension dans lesdites installations d'éclairage et/ou au moins une charge de dispositif final compatible continu ; et
des moyens pour combiner ladite puissance électrique convertie provenant d'une première source avec ladite autre source de puissance continue en service pour prendre en charge ladite au moins une charge ou lesdites charges de dispositifs finaux compatibles continus ;
et lesdits moyens de commande de puissance sont agencés pour modifier ladite tension de sortie continue convertie en tant que moyens pour commander la puissance délivrée par ladite autre source de puissance continue.

2. Système d'alimentation selon la revendication 1, lesdits moyens de commande de puissance comprenant en outre des moyens pour limiter le courant à ladite sortie continue à une limite supérieure définie prescrite par une capacité de puissance maximum desdits moyens de commande de puissance tout en délivrant encore la puissance.

3. Système d'alimentation selon la revendication 1, lesdits moyens de commande de puissance comprenant en outre des moyens pour interrompre la puissance de sortie délivrée lors de la détection d'un court-circuit aux bornes de sortie desdits moyens de commande de puissance.

4. Système d'alimentation selon la revendication 1, dans lequel ladite autre source de puissance continue est une batterie de stockage rechargeable pour, dans le cas d'un défaut de puissance de ladite source alternative, continuer à desservir ladite au moins une charge compatible continue, et les moyens de commande de puissance sont agencés pour maintenir de manière optimale la charge dans un mode d'attente fixe de ladite batterie de stockage rechargeable par ladite tension de sortie régulée desdits moyens de commande de puissance.

5. Système d'alimentation selon la revendication 4, comportant des moyens pour activer la batterie de stockage rechargeable pour prendre en charge ladite au moins une charge compatible continue lors de l'extinction de ladite entrée alternative vers lesdits moyens de commande de puissance.

6. Système d'alimentation selon la revendication 4, dans lequel lesdits moyens de commande de puissance sont agencés pour, en l'absence d'une source de puissance de prise en charge, isoler électriquement ladite batterie de stockage de ladite au moins une charge compatible continue dans le cas où un état de charge de batterie, tel que mesuré par la tension aux bornes de ladite batterie, tombe au-dessous d'une valeur prédéterminée.

7. Système d'alimentation selon la revendication 4, dans lequel lesdits moyens de commande de puissance sont agencés pour interrompre l'application de puissance à ladite batterie de stockage à partir de n'importe quelle autre source de puissance continue connectée dans le cas où ladite batterie de stockage est totalement chargée.

8. Système d'alimentation selon la revendication 1, dans lequel ladite autre source de puissance continue est un convertisseur d'énergie pour convertir une source d'énergie en une tension électrique continue compatible.

9. Système d'alimentation selon la revendication 1, dans lequel ladite autre source de puissance continue est un panneau solaire photovoltaïque.

10. Système d'alimentation selon la revendication 1, dans lequel ladite autre source de puissance continue est une pile à combustible.

11. Système d'alimentation selon la revendication 1, dans lequel ladite autre source de puissance continue est un générateur électrique continu entraîné mécaniquement par la combustion interne de combustible fossile.

12. Système d'alimentation selon la revendication 1, dans lequel ladite autre source de puissance continue est un cogénérateur continu à combustible.

13. Système d'alimentation selon la revendication 12, dans lequel ledit cogénérateur continu à combustible est un générateur photovoltaïque thermique.

14. Système d'alimentation selon la revendication 12, dans lequel le cogénérateur continu à combustible est un générateur à pile à combustible.

15. Système d'alimentation selon la revendication 1, dans lequel ladite autre source de puissance continue est agencée pour produire une puissance continue requise.

16. Système d'alimentation selon la revendication 4, dans lequel ladite batterie de stockage est combinée en une combinaison de puissance avec un convertisseur d'énergie pour convertir une source d'énergie en une tension électrique continue compatible.

17. Système d'alimentation selon la revendication 16, dans lequel ladite combinaison de puissance est agencée pour délivrer une puissance proportionnellement à ladite charge.

18. Système d'alimentation selon la revendication 16, dans lequel ladite combinaison de puissance est agencée pour délivrer une puissance proportionnellement à ladite charge en tant que dispositif d'uniformisation de charge de puissance.

19. Système d'alimentation selon la revendication 4, dans lequel lesdits moyens de commande de puissance pour recevoir un courant alternatif AC d'une source comportent des moyens pour ramener un facteur de puissance près de l'unité, en renvoyant une distorsion harmonique totale très faible vers ladite source alternative.

20. Système d'alimentation selon la revendication 1, dans lequel lesdits moyens de commande de puissance et ladite autre source de puissance continue sont agencés pour alimenter un groupe de multiples charges continues, afin de réduire à un minimum les longueurs de câble basse tension et ainsi les chutes de tension entraînant une perte de puissance.

21. Système d'alimentation selon la revendication 20, comprenant un câble alternatif haute tension standard de longueur proportionnellement plus longue par rapport auxdits câbles basse tension continus pour alimenter les groupes.

22. Système d'alimentation selon la revendication 20, comprenant de multiples moyens de commande de puissance, chacun desdits moyens de commande de puissance étant agencé pour commander la puissance de son propre groupe, le système d'alimentation comprenant en outre un unique câble alternatif haute tension standard de longueur proportionnellement plus longue par rapport auxdits câbles basse tension continus pour alimenter chacun des groupes.

23. Système d'alimentation selon la revendication 4, dans lequel ladite batterie de stockage est combinée en une combinaison de puissance avec un convertisseur d'énergie dans un conteneur conditionné pour desservir ladite charge ou lesdites charges compatibles continues.

24. Système d'alimentation selon la revendication 4, dans lequel ladite batterie de stockage est combinée en une combinaison de puissance avec un convertisseur d'énergie pour fonctionner pour desservir une charge ou des charges compatibles continues sans le support d'une alimentation alternative délivrée par un réseau de distribution central comme dans un système d'alimentation pris en charge autonome de non réseau de distribution.

25. Système d'alimentation selon la revendication 4, dans lequel lesdits moyens de commande de puissance restent en tant que point de commande de puissance central dans ledit système d'alimentation pour toutes les autres sources de puissance externes à la source de réseau de distribution central, et dans lequel lesdits moyens de commande de puissance sont en outre agencés pour utiliser une source locale de puissance générée alternative.
